**Europäisches Patentamt**

**European Patent Office**

**Office européen des brevets**

(11) Veröffentlichungsnummer: **0 064 100**

**A2**

## (12) EUROPÄISCHE PATENTANMELDUNG

(21) Anmeldenummer: **81110481.9**

(22) Anmeldetag: **16.12.81**

(51) Int. Cl.³: **B 65 G 33/02**

(30) Priorität: **04.05.81 CH 2876/81**

(43) Veröffentlichungstag der Anmeldung:
**10.11.82 Patentblatt 82/45**

(84) Benannte Vertragsstaaten:
**AT CH DE FR LI NL SE**

(71) Anmelder: **TRABAG BERN**
**Morgenstrasse 121**
**CH-3018 Bern(CH)**

(72) Erfinder: **Graessle, Volker**
**Bergstrasse 20**
**CH-3028 Spiegel(CH)**

(74) Vertreter: **Keller, René, Dr. et al,**
**Patentanwälte Hartmut Keller, Dr. René Keller Postfach**
**12**
**CH-3000 Bern 7(CH)**

(54) **Fördereinrichtung für an Haken hängendes Gut, insbesondere für auf Kleiderbügeln hängende Bekleidungsstücke.**

(57) Unmittelbar unter einer Förderschnecke (1) ist eine Gleitschiene angeordnet, auf der die Haken von der Schnecke (1) mitgenommen gleiten. Die Schiene besteht aus mehreren in Abständen voneinander angeordneten Schienenabschnitten (4, 5), die durch Verbindungsstücke (6) miteinander verbunden sind. Die Verbindungsstücke (6) sind mittels Schwenkvorrichtungen (26, 27) aus der Schienenbahn bewegbar. Damit kann jeder Haken an der jeweils gewünschten Stelle zwischen zwei Schienenabschnitten (4, 5) aus der Schienenbahn abgezweigt werden.

Fig. 2

**EP 0 064 100 A2**

Fördereinrichtung für an Haken hängendes Gut, insbesondere für auf Kleiderbügeln hängende Bekleidungsstücke

Die Erfindung betrifft eine Fördereinrichtung für an Haken hängendes Gut, insbesondere für auf Kleiderbügeln hängende Bekleidungsstücke gemäss dem Oberbegriff des Patentanspruchs 1.

Es sind Fördereinrichtungen dieser Art bekannt, bei denen Kleiderbügelhaken auf eine sich drehende Schnecke gehängt und am Ende des Förderweges wieder von der Schnecke abgenommen werden. Bei solchen Fördereinrichtungen, die z.B. in Bekleidungsbetrieben, Wäschereien und chemischen Reinigungen verwendet werden, will man häufig nicht sämtliche aufgegebenen Bekleidungsstücke am Ende des Förderweges sondern einzelne Bekleidungsstücke an bestimmten Stellen aus dem Förderweg herausnehmen. Dazu hat man bisher den Schneckenwulst an diesen Stellen unterbrochen, so dass sich sämtliche Kleiderbügelhaken an jeder dieser Stellen auf dem dort wulstlosen, zylindrischen Schneckenkernabschnitt stauten.

Die gewünschten Bekleidungsstücke wurden an der Staustelle abgenommen und die Kleiderbügelhaken der weiterzubefördernden Bekleidungsstücke auf den Wulst des anschliessenden Schneckenabschnitts gehängt. Für das mühsame und zeitaufwendige Abnehmen und Weiterbefördern
der Bekleidungsstücke musste ständig Bedienungspersonal
zur Verfügung stehen.

Der Erfindung liegt die Aufgabe zugrunde, eine Fördereinrichtung der eingangs genannten Art zu schaffen,bei
welcher die das Gut tragenden Haken automatisch an bestimmten Stellen aus dem Förderweg abgezweigt werden
können.

Die erfindungsgemässe Lösung dieser Aufgabe ist Gegenstand des Patentanspruchs 1. Vorteilhafte Weiterbildungen der Erfindung sind in den Patentansprüchen 2
bis 10 umschrieben.

Im folgenden wird anhand der Zeichnung ein Ausführungsbeispiel der Erfindung näher beschrieben. Es zeigen:

Fig. 1   eine Seitenansicht eines Teilstücks einer Fördereinrichtung für auf Kleiderbügeln hängende
         Bekleidungsstücke,

Fig. 2   eine Draufsicht auf das Förderteilstück von

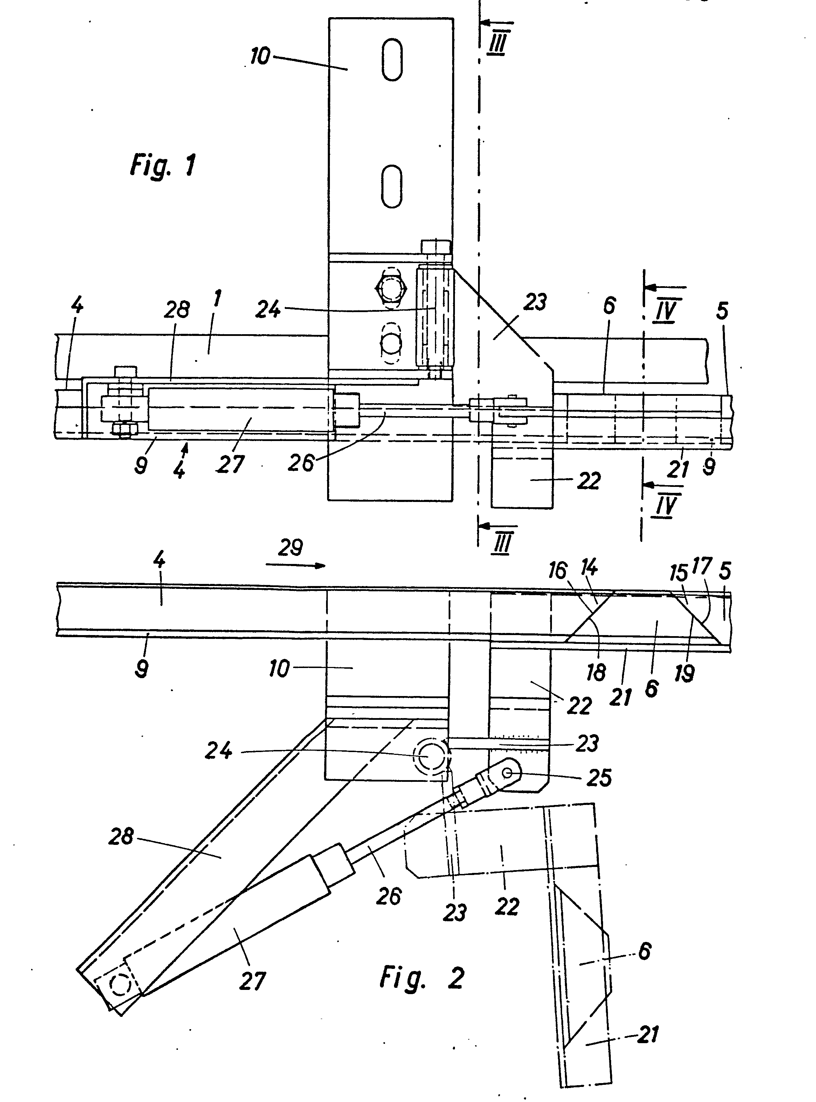

         Fig. 1, ohne die Förderschnecke,

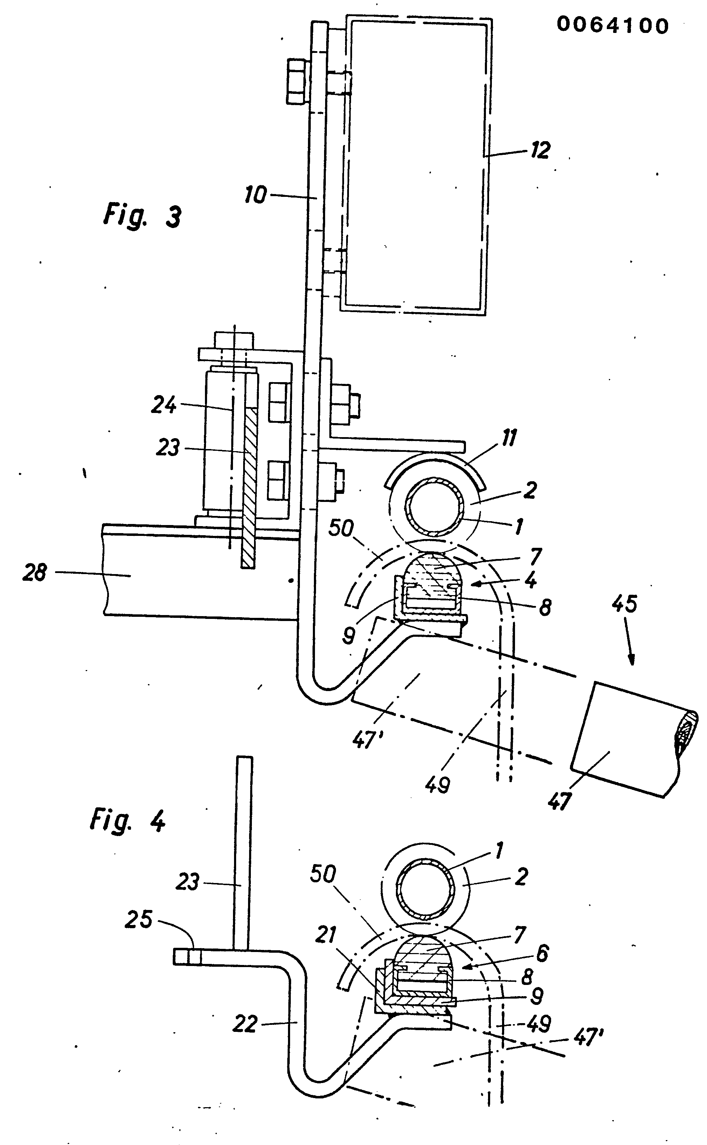

Fig. 3   einen Schnitt nach der Linie III-III in Fig. 1,
         in grösserem Massstab, mit einem in Fig. 1 nicht
         dargestellten Kleiderbügelhaken und dem oberen
         Ende einer Abzweigschiene,

Fig. 4    einen Schnitt nach der Linie IV-IV in Fig. 1,
          in grösserem Massstab, mit dem in Fig. 3 dar-
          gestellten Kleiderbügelhaken und dem vorge-
          schobenen Ende der Abzweigschiene,

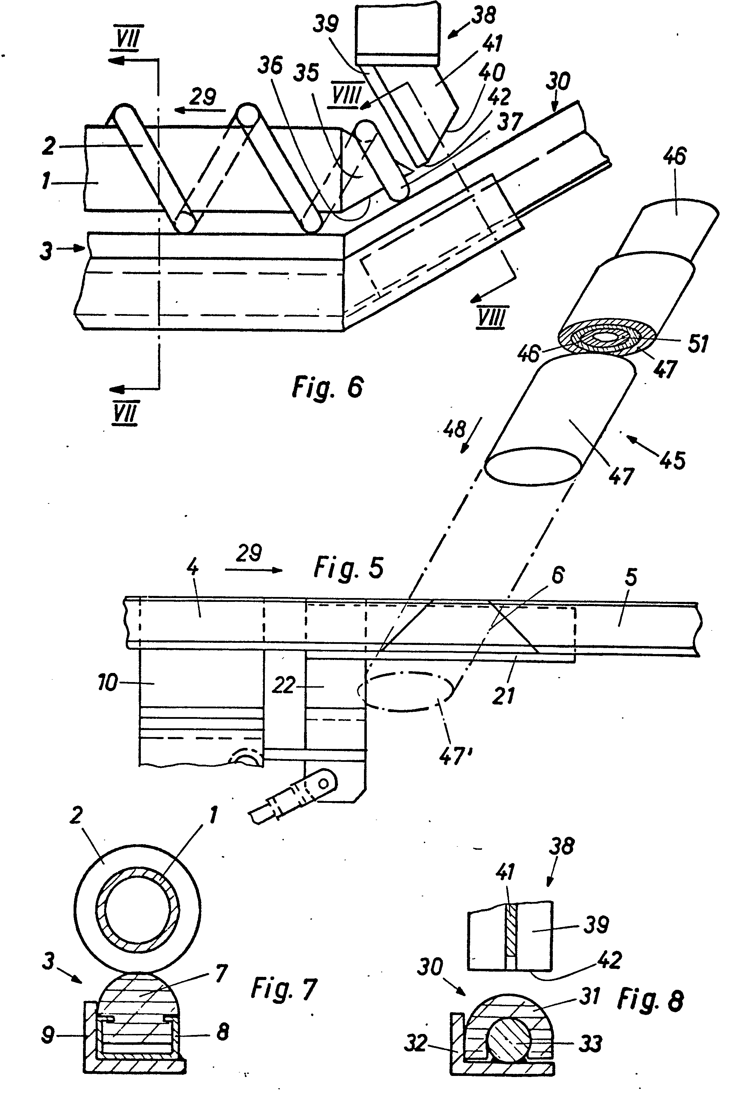

Fig. 5    eine Fig. 2 entsprechende Draufsicht auf das
          Förderteilstück mit einer in Fig. 1 und 2 nicht
          dargestellten Abzweigschiene,

Fig. 6    eine Seitenansicht der Stelle der Fördereinrichtung, an der die Bekleidungsstücke zugeführt werden, in grösserem Massstab,

Fig. 7    einen Schnitt nach der Linie VII-VII in Fig. 6
          und

Fig. 8    einen Schnitt nach der Linie VIII-VIII in Fig. 6.

Die Fördereinrichtung hat eine Förderschnecke 1, deren
Wulst 2 unmittelbar über einer Gleitschiene läuft. Die
Gleitschiene besteht aus mehreren in Abständen voneinander angeordneten Schienenabschnitten, die durch Verbindungsstücke miteinander verbunden sind. Die auf Kleiderbügeln hängenden Bekleidungsstücke werden dem in
Fig. 5 dargestellten Endabschnitt 3 der Gleitschiene,
wie weiter unten näher beschrieben, zugeführt. Die Kleiderbügelhaken gleiten dann von der Schnecke 1 mitgenommen auf der Gleitschiene, von der in Fig. 1 und 2
die einander benachbarten Teile zweier aufeinanderfolgender Schienenabschnitte 4, 5 und das diese verbindende Verbindungsstück 6 dargestellt sind.

Die Schienenabschnitte und die Verbindungsstücke bestehen aus einem oben runden Kunststoffprofil 7, das mittels eines C-Metallprofils 8 stabilisiert und auf einem Winkeleisen 9 gelagert ist (Fig. 3 und 4). Jeder der Schienenabschnitte ist mit seinem Winkeleisen 9 auf zwei unten bügelförmige Träger geschweisst. In Fig. 1 bis 3 ist einer der beiden Träger, die den Schienenabschnitt 4 tragen, dargestellt und mit 10 bezeichnet. Die Träger, welche auch Lagerschalen 11 für die Schnecke 1 tragen, sind an einem über die ganze Schienenbahn verlaufenden Vierkanteisen 12 befestigt.

Das Verbindungsstück 6 ist im horizontalen Längsschnitt trapezförmig und die durch sie verbundenen Enden 14, 15 der Schienenabschnitte 4, 5 sind entsprechend keilförmig (Fig. 2). Die Keilflanken 16, 17 der Schienenabschnittenden 14, 15 und die konvergierenden Flächen 18, 19 des Verbindungsstücks 6 verlaufen vertikal. Das Winkeleisen 9 des Verbindungsstücks 6, dessen vertikaler Schenkel im Längsschnitt die längere Grundseite des Trapezes bildet, ist auf einem längeren, das Winkeleisen 9 an beiden Enden überragenden, zweiten Winkeleisen 21 befestigt, das in der dargestellten Ruhelage des Verbindungsstücks 6 an den Winkeleisen 9 der Schienenabschnitte 4 und 5 anliegt. Der am Winkeleisen 9 des Schienenabschnitts 4 anliegende Teil des Winkeleisens 21 ist auf das eine Ende eines im Querschnitt bügelförmigen Trägers 22 geschweisst. An das andere Ende des Trägers 22 ist ein Arm 23 geschweisst, der schwenkbar um eine am Träger 10 befestigte, vertikale Achse 24 gelagert ist. An der mit 25 bezeichneten Stelle des anderen Trägerendes ist die Kolbenstange 26 eines Pneumatikzylinders 27 angelenkt, der an einen am Träger 10 befestigten Ausleger 28 angelenkt ist. Der doppeltwirkende Pneumatikzylinder 27 und die entsprechenden Pneumatikzylinder für die übrigen Verbindungsstücke sind durch eine die Druckluftzufuhr steuernde, gemeinsame (nicht dargestellte) Steuervorrichtung gesteuert. Die Stellung, in welche der Arm
23, der Träger 22 und das Verbindungsstück 6 bei Betätigung des Pneumatikzylinders 27 schwenken, ist in Fig.
2 strichpunktiert angedeutet.

Beim Zurückschwenken des Verbindungsstücks 6 in die
Schienenbahn schlägt der vertikale Schenkel des Winkeleisens 21 an den vertikalen Schenkeln der Winkeleisen
9 der Schienenabschnitte 4, 5 an, wodurch gewährleistet
ist, dass die Profile 7, 8 des Verbindungsstücks 6 genau
mit denjenigen der Abschnitte 4, 5 fluchten. Die konvergierenden Flächen 18, 19 des Verbindungsstücks 6 liegen
dabei unmittelbar an den Keilflanken 16, 17 der Schienenabschnittenden 14, 15 oder in einem geringen Abstand
von diesen. Die Keilwinkel der Schienenabschnittenden
14, 15 betragen höchstens 60$^{\circ}$ und im gezeichneten Beispiel etwa 45$^{\circ}$. Da die auf der Gleitschiene gleitenden
Kleiderbügelhaken in der Regel annähernd rechtwinklig
zur Schienenbahn stehen, wird damit sichergestellt, dass
sie auch dann nicht an einer der oberen Kanten der
Keilflächen 16, 17 oder der konvergierenden Flächen 18,
19 anstossen, wenn das Verbindungsstück 6 nicht genau
auf der Höhe der Schienenabschnitte 4, 5 liegt.

Jedem der Verbindungsstücke ist eine Abzweigschiene
zugeordnet, wobei ein Teil der Abzweigschienen von der
einen Seite und die übrigen Abzweigschienen von der anderen Seite an die Schienenbahn herangeführt sind, so
dass beidseits der Schienenbahn Magazine bzw. Bearbeitungsstationen für das geförderte Gut aufgestellt werden können und damit mehr Platz für die einzelnen Magazine und Stationen zur Verfügung steht. Jede der von der in Fig. 3 und 4 rechten Seite (in Förderrichtung
29 gesehen von der linken Seite) an die Schienenbahn
herangeführten Abzweigschienen 45 (Fig. 3 bis 5) besteht aus einem ortsfesten Rohr 46, auf dessen oberem
Teil ein Rohrstück 47, wie durch den Pfeil 48 angedeutet, verschiebbar gelagert ist. Das Rohr 46 befindet
sich ausserhalb des Förderwegs der Hälse 49 der Kleiderbügelhaken 50 und verläuft in einer schräg zur Schienenbahn stehenden Vertikalebene von der Schienenbahn
weg nach unten geneigt. Im oberen Teil des Rohrs 46
ist ein doppeltwirkender Pneumatikzylinder 51 angeordnet, dessen Kolbenstange am Rohrstück 47 angreift und
dieses beim Vorschubhub aus der ausgezogen dargestellten Ruhelage durch den Förderweg der Hakenhälse 49
hindurch in die strichpunktiert dargestellte Lage 47'
unterhalb des Verbindungsstücks 6 schiebt. Die Pneumatikzylinder 51 für die Rohrstücke 47 sind ebenso wie
die Pneumatikzylinder 27 für die Verbindungsstücke 6
durch die (nicht dargestellte) gemeinsame Steuervorrichtung gesteuert und zwar werden die Rohrstücke 47 vorgeschoben, wenn das zugeordnete Verbindungsstück 6 aus
der Schienenbahn herausgeschwenkt wird, und zurückgezogen, wenn das Verbindungsstück 6 wieder in die Schienenbahn zurückgeschwenkt wird. Die von der in Fig. 3
und 4 linken Seite an die Schienenbahn herangeführten
Abzweigschienen sind in der Zeichnung nicht dargestellt.
Sie bestehen je aus einem ortsfesten Rohr, dessen freies
Ende unter dem zugeordneten Verbindungsstück 6 angeordnet ist und das ebenfalls in einer schräg zur Schienenbahn stehenden Vertikalebene von der Schienenbahn
weg nach unten geneigt ist. Die Neigung dieser Rohre
und entsprechend auch die Neigung der Rohre 46 ist so
gewählt, dass die bei aus der Schienenbahn herausbewegtem Verbindungsstück 6 vom vorangehenden Schienenabschnitt 4 auf das freie Ende des Rohrs bzw. das
vorgeschobene Rohrstück 47' fallenden Kleiderbügelhaken
50 auf dem Rohr infolge der Schwerkraft herabrutschen.
Die Kleiderbügel werden der Schienenbahn in der weiter
unten näher beschriebenen Weise so zugeführt, dass die
offene Seite des Bügelhakens 50 in der Seitenansicht
von Fig. 3 und 4 links liegt, weil sonst der Hakenhals
49 an den Trägern 10, 22 anschlagen würde. Die Hakenhälse 49 der für die Einrichtung verwendeten Kleiderbügel haben im übrigen eine Mindestlänge, die gewährleistet, dass die Bügelschultern, auf denen die Bekleidungsstücke hängen, in einem Abstand unter den Trägern
10, 22 der Schienenabschnitte und Verbindungsstücke
sowie unter den oberen Teilen der Abzweigschienen laufen. Wenn eines der Rohrstücke 47 in der vorgeschobenen
Lage 47' ist, schlägt der Hals 49 des Bügelhakens 50
an ihm an. Das ist erwünscht, weil das Rohrstück 47 nur
dann in der vorgeschobenen Lage 47' ist, wenn das Verbindungsstück 6 aus der Schienenbahn herausgeschwenkt
ist, der Kleiderbügel also abgezweigt werden soll und
weil der Bügelhaken 50 durch das Anschlagen seines Halses 49 am Rohrstück 47' in Richtung auf seine Förderlage auf der Abzweigschiene gedreht wird. Aus diesem
Grund können auch die von der in Fig. 3 und 4 linken
Seite an die Schienenbahn herangeführten Abzweigschienen gleich wie die Abzweigschienen 45 mit einem verschiebbaren Rohrstück 47 ausgerüstet sein, wobei dieses so weit vorzuschieben ist, dass der Hals 49 des
Bügelhakens 50 an ihm anschlägt, und die Richtung,
in der die Abzweigschiene von der Schienenbahn wegführt, so zu wählen ist, dass der Bügelhaken 50 beim
Anschlagen seines Halses 49 in Richtung auf seine Förderlage auf der Abzweigschiene gedreht wird.

Fig. 6 zeigt den Endabschnitt 3 der Schienenbahn, die aus Platzgründen bei der zeichnerischen Darstellung in Fig. 6 von der anderen Seite als in Fig. 1 gesehen ist, so dass die Förderrichtung 29 im Gegensatz zur Darstellung in den Fig. 1, 2 und 5 von rechts nach links verläuft. An den Endabschnitt 3, dem die Kleiderbügelhaken zuzuführen sind, schliesst eine nach oben geneigte Zufuhrschiene 30 an, die, wie Fig. 8 zeigt, aus einem Kunststoffprofil 31 besteht, das auf einem an ein Winkeleisen 32 geschweissten Metallstab 33 sitzt. Das Kunststoffprofil 31 und der Stab 33 sind länger als das Winkeleisen 32, damit sie am oberen Ende in die für die Zuführung gewünschte Lage gebogen werden können. Der Neigungswinkel der Zufuhrschiene 30 ist so gewählt, dass die an ihrem oberen Ende aufgegebenen Bügel infolge der Schwerkraft auf ihr herabrutschen. Die Schnecke 1 hat einen das Ende des Schienenendabschnitts 3 überragenden, konisch verjüngten Endteil 35. Der Oeffnungswinkel des konischen Endteils 35 ist so gewählt, dass die jeweils untere Mantellinie 36 des konischen Schneckenkernendes parallel zur Zufuhrschiene 30 verläuft und der Schneckenwulst 37 des Endteils 35 unmittelbar über der Zufuhrschiene 30 läuft. Ueber der Zufuhrschiene 30 ist eine Führung 38 angeordnet, die aus einem T-Profil besteht, dessen Flansch 39 senkrecht zur Schiene 30 verläuft. Die der Schiene zugewandte Stirnfläche 40 des T-Profilstegs 41 ist abgeschrägt, also stärker geneigt als die Zufuhrschiene 30. Die Stirnfläche 42 des Flansches 39, an welche die Stirnfläche 40 des Stegs 41 anschliesst, grenzt an den Schneckenendteil 35 an und hat denselben Abstand von der Zufuhrschiene 30 wie die untere Mantellinie 36 des Schneckenkernendes 35. Die beiden Stirnflächen 40, 42 bilden Führungsflächen für die auf der Zufuhrschiene 30 nach unten rutschenden Kleiderbügelhaken und verhindern, dass diese statt unter auf die Schnecke 1 gelangen. Die so unter den konisch verjüngten Schneckenendteil 35 geführten Kleiderbügelhaken werden vom Schneckenwulst 37 zuverlässig mitgenommen, weil sie auf der geneigten Zufuhrschiene 30 durch die Schwerkraft in die Wulstkurve 37 hineinrutschen.

Bei der im folgenden erläuterten, automatischen Förderung und Abzweigung von Bekleidungsstücken an vorbestimmten Stellen ist das in der beschriebenen Weise erreichte, zuverlässige und unverzögerte "Einschleusen" der zugeführten Bekleidungsstücke am Endabschnitt 3 besonders wichtig. Die einzelnen Bekleidungsstücke werden nämlich in genau gleichen Zeitabständen nacheinander auf die Zufuhrschiene 30 aufgegeben. Dabei wird die Aufgabezeit, die Art des Bekleidungsstücks und die Abzweigstelle, an der das Bekleidungsstück aus der Schienenbahn abgezweigt werden soll, im Speicher eines Mikroprozessors der Steuervorrichtung gespeichert. Der Mikroprozessor berechnet dann aus der konstanten Fördergeschwindigkeit der Einrichtung den Zeitpunkt, an dem das betreffende Bekleidungsstück an der gewünschten Abzweigstelle anlangt und beaufschlagt unmittelbar vor diesem Zeitpunkt den Pneumatikzylinder 27 dieser Abzweigstelle und, falls die Abzweigschiene mit einem verschiebbaren Rohrstück 47 ausgerüstet ist, auch den Pneumatikzylinder 51. Dadurch wird das Verbindungsstück 6 dieser Abzweigstelle aus der Schienenbahn herausgeschwenkt, das Rohrstück 47 vorgeschoben und der Kleiderbügelhaken 50 fällt auf das Rohrstück 47 bzw. den oberen Teil der Abzweigschiene und rutscht auf dieser entweder in einen Kleiderbehälter oder zu einer zweiten Fördereinrichtung, die das Kleidungsstück, gegebenenfalls über weitere Abzweigungen und
Fördereinrichtungen, zur Zielstation fördert.

RK/eb-6673
26.11.81

Patentansprüche

1. Fördereinrichtung für an Haken (50) hängendes Gut,
insbesondere für auf Kleiderbügeln hängende Bekleidungsstücke, mit einer Förderschnecke (1) für die Haken (50),
gekennzeichnet durch eine unter der Schnecke (1) angeordnete Gleitschiene, auf der die Haken (50) von der
darüber liegenden Schnecke (1) mitgenommen gleiten,
und die aus mehreren in Abständen voneinander angeordneten Schienenabschnitten (3, 4, 5) besteht, die durch
Verbindungsstücke (6) miteinander verbunden sind, welche
wahlweise mittels Bewegungsvorrichtungen (26, 27) aus
der Schienenbahn bewegbar sind, damit jeder Haken (50)
an der jeweils gewünschten Stelle zwischen zwei Schienenabschnitten (4, 5) aus der Schienenbahn abgezweigt
werden kann.

2. Einrichtung nach Anspruch 1, dadurch gekennzeichnet,
dass jedem Verbindungsstück (6) eine Abzweigschiene (45)
zugeordnet ist, die schräg von der Schienenbahn weg
und nach unten geneigt verläuft und deren oberer Endteil (47) entweder ortsfest unter dem Verbindungsstück
(6) angeordnet oder aus einer Ruhelage durch den Förderweg der Hakenhälse (49) unter das Verbindungsstück (6)
bewegbar (48) ist, wobei die Neigung der Abzweigschiene (45) so gewählt ist, dass die bei aus der Schienenbahn herausbewegtem Verbindungsstück (6) vom vorangehenden Schienenabschnitt (5) auf den oberen Endteil (47)
der Abzweigschiene fallenden Haken (50) auf der Abzweigschiene (45) infolge Schwerkraft herabrutschen.

3. Einrichtung nach Anspruch 2, dadurch gekennzeichnet, dass von beiden Seiten Abzweigschienen (45) an die Schienenbahn herangeführt sind und wenigstens jede der von der einen Seite herangeführten Abzweigschienen (45) den aus der Ruhelage durch den Förderweg der Hakenhälse (49) unter das Verbindungsstück (6) bewegbaren oberen Endteil (47) haben, der vorzugsweise verschiebbar an der Abzweigschiene (45, 46) gelagert ist.

4. Einrichtung nach einem der Ansprüche 1 bis 3, dadurch gekennzeichnet, dass die Bewegungsvorrichtungen doppeltwirkende Kolben-Zylinder-Einheiten (26, 27) sind, die je an einem um eine vertikale Achse (24) schwenkbaren Träger (22) angelenkt sind, der das Verbindungsstück (6) trägt und es bei der jeweiligen Betätigung der Kolben-Zylinder-Einheit (26, 27) aus der Schienenbahn weg bzw. in diese zurück schwenkt.

5. Einrichtung nach einem der Ansprüche 1 bis 4, dadurch gekennzeichnet, dass die Verbindungsstücke (6) im Längsschnitt trapezförmig und die durch sie verbundenen Schienenabschnittenden (14, 15) keilförmig sind, wobei die Keilwinkel der Schienenabschnittenden (14, 15) vorzugsweise höchstens 60° betragen.

6. Einrichtung nach Anspruch 5, dadurch gekennzeichnet, dass die Keilflanken (16, 17) der Schienenabschnittenden (14, 15) und die konvergierenden Flächen (18, 19) der Verbindungsstücke (6) wenigstens annähernd vertikal verlaufen und die Verbindungsstücke (6) mittels der Bewegungsvorrichtungen (26, 27) wenigstens annähernd horizontal aus der Schienenbahn wegschwenkbar sind.

7. Einrichtung nach Anspruch 6, dadurch gekennzeichnet, dass an der im Längsschnitt die längere Grundseite des Trapezes bildenden Seitenfläche des Verbindungsstücks (6) eine Anschlagschiene (21) befestigt ist, die beim Schwenken des Verbindungsstücks (6) in die Schienenbahn an den beiden benachbarten Schienenabschnitten (4, 5) anschlägt.

8. Einrichtung nach einem der Ansprüche 1 bis 7, dadurch gekennzeichnet, dass an den Endabschnitt (3) der Schienenbahn, dem die Haken zuzuführen sind, eine nach oben geneigte Zufuhrschiene (30) anschliesst, deren Neigungswinkel so gewählt ist, dass die Haken (50) infolge der Schwerkraft auf ihr herabrutschen, und dass die Schnecke (1) einen den Endabschnitt (3) überragenden, konisch verjüngten Endteil (35) hat.

9. Einrichtung nach Anspruch 8, dadurch gekennzeichnet, dass der Oeffnungswinkel des konisch verjüngten Endteils (35) der Schnecke (1) so bemessen ist, dass die jeweils untere Mantellinie (36) des konischen Schneckenkernendes (35) parallel zur Zufuhrschiene (30) verläuft und der Schneckenwulst (37) des Endteils (35) unmittelbar über der Zufuhrschiene (30) läuft.

10. Einrichtung nach Anspruch 8 oder 9, gekennzeichnet durch eine über der Zufuhrschiene (30) angeordnete Führung (38) mit einer Führungsfläche (40, 42). die stärker geneigt ist als die Zufuhrschiene (30), zum konisch verjüngten Schneckenendteil (35) verläuft und deren an den Schneckenendteil (35) angrenzender Bereich (42) wenigstens annähernd denselben Abstand von

der Zuführschiene (30) hat wie die jeweils untere Mantellinie (36) des konischen Schneckenkernendes (35).

RK/eb-6673
26.11.81

1/3

0064100

Fig. 1

Fig. 2

0064100

Fig. 3

Fig. 4

0064100

Fig. 6

Fig. 5

Fig. 7

Fig. 8